# EUROPEAN PATENT APPLICATION

(11) **EP 1 457 725 A1**
(43) Date of publication of application: **15.09.2004**
(21) Application number: 03425150.4
(22) Date of filing: 13.03.2003
(51) Int. Cl.: F16L 29/00, F16L 33/00

(54) **A device for absorbing water hammer in hydraulic systems**

(71) Applicant: Andolina Claudio & C. S.n.c., 28017 S. Maurizio d'Opaglio (NO) (IT)
(72) Inventor: Andolina, Claudio, 28017 S. Maurizio d'Opaglio (NO) (IT)
(74) Representative: Valentini, Giuliano

(57) **Abstract**

A device for absorbing water hammer in a water supply systems is disclosed, comprising a flexible hose (10) provided at its ends with suitable connecting elements (20), characterized by comprising at least one non-return valve (40) fitted in at least one of the connecting elements.

## Description

The present invention relates to a device for absorbing water hammer in hydraulic, heating and sanitary systems. "Water hammer" is a phenomenon that may occur in the pipes of water supply systems when the flow of water is suddenly shut off.

For example, when a water supply tap is suddenly turned off in a domestic system, the pressure upstream of the tap increases suddenly (and then decrease) and causes a shock wave which is discharged to the pipes supplying the tap, which are built into the walls.

This phenomenon is even more frequent in case of installation of the current most widely used taps, such as ceramic disc or single-control mixer taps, through which water can be turned off with movements limited to an angle of a few tenths of degrees and, consequently, very quickly.

The shock wave that propagates to the internal pipes, in addition to causing bothersome noises, can cause damages to the pipes, as well as to the walls into which they are built.

For this reason, valve mechanisms are incorporated in some taps and mixers to delay the actual shutting down of the water flow even subsequent to sudden turning off of the control member, whether this is a handle or lever. In addition to being costly and complex to produce, these solutions may not be particularly reliable through time. Moreover, any malfunctioning of the valve mechanisms incorporated in the taps may even require replacement of the entire tap assembly, with high costs for the final customer.

Patent application EP-A-0565183 proposes a device able to absorb water hammer. The device is composed of a rigid pipe inside which a flexible pipe is housed coaxially to form a sealed air chamber in the cavity between the two pipes.

When the pressure increases subsequent to a tap being turned off suddenly, the air in the space between the two pipes is compressed and allows the hammer to be dampened. A non-return valve is provided inside one of the two end connectors of the assembly of coaxial hoses, even if this valve does not participate in the operation of the device.

This solution is somewhat disadvantageous from the viewpoint of costs and installation as it constitutes an additional accessory which must be provided in the plumbing system along each of the hoses to supply water to the taps. It is easy to understand that installation of a similar device in pre-existing systems may be difficult, if not impossible. Moreover, the effectiveness of this known device also seems limited because connection in parallel of several devices along a single hose is suggested.

The object of the present invention is to solve the drawbacks of prior art, by providing a device for absorbing water hammer which is simple to produce and particularly effective.

Another object of the present invention is to propose a device for absorbing water hammer which is also easy to install in pre-existing systems without making any substantial modifications to the system.

A further object of the present invention is to propose a device for absorbing water hammer which may be produced with limited costs.

These objects are achieved by the present invention, which relates to a device for absorbing water hammer in water supply systems, comprising a flexible hose provided at its ends with suitable connecting elements, characterized in that it comprises at least one non-return valve fitted in at least one of the connecting elements.

By incorporating a simple non-return valve (also known as one-way, check or single-acting valve) in a flexible hose, a particularly simple device is obtained.

The device according to the invention has also proved to be particularly effective. Although the mechanism according to which excellent results in absorption of the water hammer is not very clear, it is presumed that, at the time in which there is an increase in pressure due to a tap being suddenly turned off, the non-return valves closes, thus preventing the hammer from be transmitted to the rest of the system upstream, and the energy of the hammer is discharged only on the flexible hose and dispersed in the form of elastic deformation and/or vibrations of this hose.

The device is preferably produced in the form of a common flexible hose of the type used to connect single control mixers and/or taps to water supply pipes, that is a flexible hose constituted by a hose in elastomeric material lined on the outside with a tubular mesh of braided threads, for example metal, synthetic or natural threads, or a tubular mesh produced with strands of different nature in combination.

Advantageously, the non-return valve is housed in a seat produced inside the connecting element in which it is fitted and may be kept inside this in various ways, for example by interference fit, or by an elastic ring fitted in a specific internal groove. In the second case, the valve is easily removable, and therefore replaceable in the event of need.

In general, the device according to the present invention is constructionally simple and inexpensive from the viewpoint of its production. Moreover, it may easily replace pre-existing flexible hose already installed without requiring any modification to the plumbing system.

Further characteristics and advantages of the present invention shall become more apparent from the description hereunder, provided purely as a non-limiting example with reference to the schematic drawings attached, in which:
- Figure 1 is a view, partly in a longitudinal section, of a portion of a device according to a possible embodiment of the present invention;
- Figure 2 is an exploded view of the components of a connecting element of the device shown in Figure 1, with a partial section of the valve-holder body; and
- Figure 3 is an exploded view of the components of a connecting element of a device according to a possible alternative embodiment of the present invention, again with a partial section of the valve-holder body.

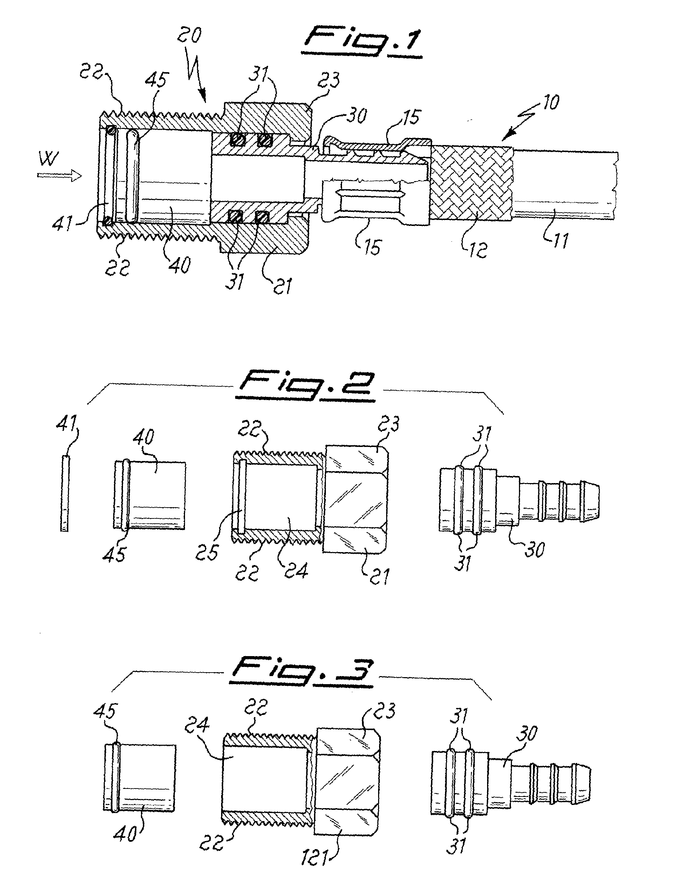

The device shown in Figure 1 comprises a flexible hose 10 which is provided at one of its ends with a connecting element 20. In the embodiment shown, the flexible hose 10 is constituted by a hose in elastomeric material 11 lined externally with a tubular mesh 12 (also known as "braid") of braided threads. These may be produced in metallic, synthetic or natural material which may also be combined to provide the required mechanical characteristics of the flexible hose 10.

The flexible hose 10 is fitted into a hose-holder element 30 with an end having a larger diameter fitted inside the valve-holder body 21. The valve-holder body 21 shown here forms a male connector of the rotating type, that is a connector provided with a threaded portion 22 on its external surface and a shaped portion, for example hexagonal, suitable to allow rotation of the valve-holder body 21 by means of a suitable tool.

Sealing rings 31 of the O-ring type mounted on the hose-holder element 30 guarantee seal while allowing the valve-holder body 21 to rotate in relation to the hose-holder element 30. The flexible hose 10 is kept on the hose-holder element 20 by a metal clamping bush 15 which is plastically deformed during manufacture of the device.

According to the present invention, a non-return valve 40 is fitted inside the connector 20 and, more specifically, inside the valve-holder body 21; this is a one-way valve mounted in such a way as to allow normal flow of a fluid in the direction indicated by the arrow W shown in Figure 1.

With reference now also to Figures 2 and 3, it can be seen that the non-return valve 40 is provided with an elastic sealing ring 45 and is housed in a seat 24 produced inside the connecting element 20 and, more specifically, inside the valve-holder body 21.

In the embodiment of Figures 1 and 2, the valve 40 is kept in position by an elastic ring 41 fitted in a specific groove 25 (Figure 2) produced inside the valve-holder body 21. This makes it possible to remove the valve 40 from the seat 24 if it is necessary to replace it.

In the embodiment shown in Figure 3, the non-return valve 40 is instead kept inside the valve-holder body 121 by interference fit, therefore without the need to produce a groove inside the valve-holder body 21. In this case, other permanent holding modes may be provided, such as cementing, welding or the like.

## Claims

1. A device for absorbing water hammer in water supply systems, comprising a flexible hose provided at its ends with suitable connecting elements, **characterized by** comprising at least one non-return valve fitted in at least one of said connecting elements.

2. A device according to claim 1, wherein said flexible hose is constituted by a hose in elastomeric material lined externally with a tubular mesh of braided threads.

3. A device according to claim 1, wherein said non-return valve is housed in a seat made inside said connecting element in which it is fitted.

4. A device according to claim 1, wherein said non-return valve is kept inside said connecting element by interference fit.

5. A device according to claim 1, wherein said non-return valve is kept inside said connecting element by at least one elastic ring.

6. A device according to claim 1, wherein said connecting element in which said non-return valve is fitted is rotatable in relation to said flexible hose.
